# EUROPEAN PATENT APPLICATION

(11) **EP 4 640 344 A1**
(43) Date of publication of application: **29.10.2025**
(21) Application number: 25166209.4
(22) Date of filing: 26.03.2025
(51) Int. Cl.: B23B 3/26, B23C 1/00, B23C 3/00, B23B 5/16

(54) **FLANGE PROCESSING DEVICE AND METHOD FOR PROCESSING A SURFACE OF AN INNER FLANGE OF A TUBULAR STRUCTURE**

(30) Priority: 22.04.2024 DK PA202430186
(71) Applicant: CNC ONSITE A/S, 7100 Vejle (DK)
(72) Inventor: Toft, Hans Løvlund, 7182 Bredsten (DK)
(74) Representative: Andreasen, Søren Laursen Vasegaard

(57) **Abstract**

A flange processing device (2) for processing a surface of an inner flange (6) of a tubular structure (8) is disclosed. The flange processing device (2) comprises a body portion (34), wherein a plurality of intermediate members (16) is attached to and protrudes from the body portion (34), wherein a moveably arranged fixation element (24, 25) is provided at the distal end of each intermediate member (16), wherein each fixation element (24, 25) is configured to provide a detachable attachment of the fixation element (24, 25) to the flange (6). The flange processing device (2) comprises a processing unit (12) moveably attached to the body portion (34), wherein the processing unit (12) is arranged and configured to process the surface of the flange (6). The flange processing device (2) comprises a rotation unit (18, 18') configured to rotate the body portion (34) about an axis (L) extending along a length of one of the intermediate members (16).

## Description

### Field of invention

The present invention relates to a flange processing device for processing a surface of an inner flange of a tubular structure. The present invention also relates to a method for processing a surface of an inner flange of a tubular structure.

### Prior art

Large tubular structures like transmission pieces and pipes comprising a flange portion extending along an inner surface are typically made without a flange. The flange is typically attached to the inner surface by welding and often requires processing. Most often the flange needs processing because it is not sufficiently flat. The processing procedure may be carried out manually by staff that enter the tubular structure and carry out a manual processing. This option is, however, not practical, since it is extremely difficult even for trained staff to process a flange to achieve a sufficiently large degree of flatness. Accordingly, several types of high precision (tolerances less than 10 mm) processing equipment have been developed. The typical prior art high precision processing equipment is configured to be permanently fixed to inside structures of the tubular structure in a position that allows an adjacent axial surface of the flange to be processed in order to achieve a sufficiently large degree of flatness.

One problem associated to the use of the prior art high precision processing equipment is that the flange is placed in a large distance from the end portions of the tubular structure. For transmission pieces, the typical distance between the flange and the first and nearest end is about 8 meters, whereas the typical distance between the flange and the second end is about 15 meters. Therefore, it is extremely difficult to process the part of the flange facing the second end because the processing equipment cannot be arranged in a position making it possible to process the flange in a required manner.

WO9006201A1 discloses a machine tool comprising a rotatable carriage rotatably located in mounting means, the mounting means enabling the machine tool to be positioned and secured relative to a work piece, the rotatable carriage supporting a tool carriage mounted for axial movement on the rotatable carriage and a tool post mounted on the tool carriage for radial movement relative to the tool carriage, and drive means to rotatably drive the tool carriage and to drive the tool carriage axially relative to the rotatable carriage and to drive the tool post radially relative to the tool carriage. When positioned inside a large tubular structure comprising a flange portion, the machine tool can only be used to process the first part of a flange facing one end of the tubular structure. If part of the flange facing the second opposite end of the tubular structure has to be processed, the machine tool needs to be removed and inserted into the tubular structure through its second opposite end. In practice this is often impossible because the typical distance between the flange and the second end is about 15 meters.

Accordingly, there is a need for a method and an apparatus which reduces or even eliminates the above mentioned disadvantages of the prior art.

### Summary of the invention

The object of the present invention can be achieved by a flange processing device as defined in claim 1 and by a method as defined in claim 14. Preferred embodiments are defined in the dependent subclaims, explained in the following description and illustrated in the accompanying drawings.

The flange processing device according to the invention is a flange processing device for processing a surface of an inner flange of a tubular structure, said flange processing device comprising:
- a body portion, wherein a plurality of intermediate members is attached to and protrudes from the body portion, wherein a moveably arranged fixation element is provided at the distal end of each intermediate member, wherein each fixation element is configured to provide a detachable attachment of the fixation element to the flange;
- a processing unit moveably attached to the body portion, wherein the processing unit is arranged and configured to process the surface of the flange,
wherein the flange processing device comprises a rotation unit configured to rotate the body portion about an axis extending along a length of one of the intermediate members.

Hereby, it is possible to process both the part of the flange facing the first end and the opposite part of the flange facing the opposite second end of the tubular structure.

The body portion may be constructed in various ways. The body portion will typically be centrally arranged and be configured to be positioned in a manner, in which its center is placed near the longitudinal axis of the tubular structure. The body portion will typically be made from metal for providing the required mechanical stiffness and strength.

Each of the intermediate members are attached and protrude from the body portion. In an embodiment, the intermediate members are identical.

In an embodiment, the flange processing device comprises four intermediate members. In an embodiment, the flange processing device comprises six intermediate members. In an embodiment, the flange processing device comprises eight intermediate members. In an embodiment, the flange processing device comprises ten intermediate members.

In an embodiment, the intermediate members are evenly distributed along the circumference of the flange processing device.

A moveably arranged fixation element is provided at the distal end of each intermediate member. The fixation element may be moved by using an actuator. In an embodiment, the actuator is hydraulic. In an embodiment, the actuator is pneumatic. In an embodiment, the actuator is electric.

Each fixation element is configured to provide a detachable attachment of the fixation element to the flange.

The processing unit is moveably attached to the body portion. Accordingly, the processing unit is arranged and configured to process the surface of the flange. The term "process" may include mill, plane down, hone, polish or drill.

The rotation unit is configured to rotate the body portion 180 degrees about an axis extending along a length of one of the intermediate members. Hereby, it is possible to rotate the flange processing device into:
a) a first position, in which it is possible to process a first side of the flange facing a first end of the tubular structure and
b) a second position, in which it is possible to process the second opposite side of the flange facing the second opposite end of the tubular structure.

Accordingly, the flange processing device is capable of processing both the part of the flange facing the first end and the opposite part of the flange facing the opposite second end of the tubular structure.

In an embodiment, the flange processing device comprises:
a) a first rotation unit configured to rotate the body portion about the axis extending along a length of a first intermediate member and
b) a second rotation unit configured to rotate the body portion about the same axis, wherein the axis extends along a length of a second intermediate member,
wherein the first intermediate member and the second intermediate member are arranged on opposed ends of the body portion.

In practice, the flange processing device may comprise:
a) a first rotation unit configured to rotate the body portion about an axis L extending along a length of an uppermost intermediate member and
b) a second rotation unit configured to rotate the body portion about the axis L extending along a length of a lowermost intermediate member.

In this embodiment, the uppermost intermediate member and the lowermost intermediate member are parallel and extend along the same axis L.

In an embodiment, the intermediate members are detachably attached to the body portion. Hereby, it is possible to replace the intermediate members with new intermediate members having another geometry and size (e.g. in order to make the flange processing device fit to a smaller or larger flange).

In an embodiment, each intermediate member is attached to a spacer. Hereby, it is possible to enlarge the distance from the body portion to the fixation element to make the flange processing device fit to a large flange).

In an embodiment, one or more of the fixation elements is a clamp comprising:
a) a first clamp member and a contact member, wherein the contact member is configured to be brought into a position, in which the contact member bears against a first side of the flange;
b) a second clamp member and a contact member, wherein the contact member is configured to be brought into a position, in which the contact member bears against the same or an opposite (second) side of the flange,
wherein the clamp extends in extension of an intermediate member, wherein each clamp member is configured to move its contact member along the sides of the flange.

Hereby, it is possible to bring the flange processing device in a fixed position relative to the flange.

In an embodiment, the clamp comprises a moveably arranged contact member configured to be displaced and hereby be brought into engagement with the flange. Hereby, it is possible to bring the contact member into engagement with a tangential surface of the flange. Since the contact member provides a radially directed force towards the tangential surface of the flange, the flange processing device will be pressed into a configuration, in which the flange processing device is fixed to the flange.

At the same time, the contact members are configured to be brought into engagement with the axial surfaces of the flange. This will support the fixation and prevent the flange processing device from being pushed out of engagement with the flange.

In an embodiment, the contact member and the contact members of the clamp members are configured to be moved along the same axis. This means that the direction of movement of the contact member and the contact members are parallel.

In an embodiment, the contact member is arranged between the clamp members.

In an embodiment, the rotation unit is arranged to rotate the clamp relative to the intermediate member to which the clamp is attached and hereby rotate the flange processing device.

In an embodiment, one or more of the fixation elements is an attachment member comprising:
a) a leg member having a distally arranged contact element configured to be brought into engagement with the flange and hereby detachably attach the flange processing device to the flange.

In an embodiment, the attachment member is equipped with a moveably arranged flange support member arranged and configured to be brought into engagement with a side portion of the flange. Hereby, it is possible to provide a firm and reliable attachment to the side portion of the flange.

In an embodiment, the processing unit comprises:
a) a main milling spindle and/or a secondary milling spindle;
b) a moving member configured to move the main milling spindle and/or the secondary milling spindle along a Y axis extending perpendicular to a longitudinal axis of the tubular structure,
wherein the moving member is configured to move the main milling spindle and/or the secondary milling spindle along the longitudinal axis, wherein the moving member is configured to rotate the main milling spindle and/or the secondary milling spindle about the longitudinal axis.

In an embodiment, the moving member is configured to move the counterweight radially.

In an embodiment, the flange processing device comprises a distance sensor arranged and configured to measure the distance between a center of the flange and the inner periphery of the flange.

In an embodiment, the flange processing device is configured to prior to processing the flange:
a) moving the distance sensor along the entire inner periphery of the flange and carry out a plurality of initial distance measurements along the periphery of the flange, wherein during each measurements the distance between the center of the flange and the inner periphery of the flange is measured;
b) for each initial measurement saving the measured distance in a memory;
c) when processing the flange afterwards using the saved initial measurements to adjust for the deviation between the inner periphery of the flange and a circular geometry.

In an embodiment, the flange processing device comprises a control unit having a memory for saving a computer program and data. The control unit will typically be arranged and configured to control the actuators moving the moveable mounted structures. The control unit will typically receive data from sensors of the flange processing device.

In an embodiment, the control unit is communicatively connected to an extern receiver e.g. via the Internet or via a wireless connection or via a wired connection.

In an embodiment, the measurements are carried out on measurements points that are evenly distributed along the periphery of the flange.

In an embodiment, the distance sensor is moveably arranged and configured to detect the distance (A₁, A₂) between the center (O) of the flange and the inner periphery of the flange while being kept in contact with the inner periphery of the flange.

In an embodiment, the distance sensor is arranged and configured to detect the distance between the distance sensor and the inner periphery of the flange.

In an embodiment, the distance sensor is an optical distance sensor (e.g. a laser distance sensor).

In an embodiment, the distance sensor is an ultrasonic distance sensor.

In an embodiment, a measuring unit having a distance sensor configured to be used to measure the inner diameter of the flange in a predefined number of points along the inner periphery of the flange.

In an embodiment, the processing unit comprises a self-centering unit arranged and configured to ensure that a predefined distance between a periphery of the flange and the main milling spindle and/or the secondary milling spindle is maintained.

This is relevant if the flange is deformed e.g. due load of mass. In an embodiment, the self-centering unit is configured to apply initial measurements (data) provided by using a distance sensor according to the flange processing device.

The method according to the invention is a method for processing a surface of an inner flange of a tubular structure by using a flange processing device comprising:
- a body portion, wherein a plurality of intermediate members is attached to and protrudes from the body portion, wherein a moveably arranged fixation element is provided at the distal end of each intermediate member, wherein each fixation element is configured to provide a detachable attachment of the fixation element to the flange;
- a processing unit moveably attached to the body portion, wherein the processing unit is arranged and configured to process the surface of the flange,
wherein the method comprises the step of:
a) processing a first side of the flange by using the flange processing device being attached to the flange in a first configuration;
b) rotating the body portion 180° about an axis extending along a length of one of the intermediate members and attaching the flange processing device to the flange in this second configuration and
c) processing a second opposite side of the flange by using the flange processing device being attached to the flange in the second configuration.

In an embodiment, the method is a method for processing a surface of an inner flange of a tubular structure by using a flange processing device according to the invention.

In an embodiment, the processing unit comprises:
a) a main milling spindle and/or a secondary milling spindle;
b) a moving member configured to move the main milling spindle and/or the secondary milling spindle along a Y axis extending perpendicular to a longitudinal axis of the tubular structure,
wherein the moving member is configured to move the main milling spindle and/or the secondary milling spindle along the longitudinal axis, wherein the moving member is configured to rotate the main milling spindle and/or the secondary milling spindle about the longitudinal axis.

In an embodiment, the method comprising:
- measuring the distance between a center of the flange and the inner periphery of the flange. This may be done by using a distance sensor arranged and configured to measure the distance between a center of the flange and the inner periphery of the flange.

In an embodiment, the method, prior to processing the flange, comprising:
a) carrying out initial measurements of the distance between the center of the flange and the inner periphery of the flange at a plurality of positions along the periphery of the flange,
b) for each initial measurement saving the measured distance;
c) when processing the flange afterwards using the saved initial measurements to adjust for the deviation between the inner periphery of the flange and a circular geometry.

In an embodiment, the measurements are carried out on measurements points that are evenly distributed along the periphery of the flange. In an embodiment, the measurements are carried out on 30-50 measurements points that are evenly distributed along the periphery of the flange.

In an embodiment, the method comprising the step of ensuring that a predefined distance between a periphery of the flange and the main milling spindle and/or the secondary milling spindle is maintained. This is relevant if the flange is deformed e.g. due load of mass. In an embodiment, the self-centering unit is configured to apply initial measurements (data) provided by using a distance sensor according to the flange processing device.

### Description of the Drawings

The invention will become more fully understood from the detailed description given herein below. The accompanying drawings are given by way of illustration only, and thus, they are not limitative of the present invention. In the accompanying drawings:
- Fig. 1A: shows a cross-sectional view of a tubular structure having an inner flange;
- Fig. 1B: shows a flange processing device according to the invention being mounted inside the tubular structure shown in Fig. 1A to process a first side of the flange;
- Fig. 1C: shows the flange processing device shown in Fig. 1B, in a configuration, in which the flange processing device has been rotated to process the opposite side of the flange.
- Fig. 2A: shows a flange processing device according to the invention mounted on a flange of a tubular structure;
- Fig. 2B: shows a flange processing device according to the invention being mounted on a flange of a tubular structure;
- Fig. 3A: shows a close-up view of a clamp of a flange processing device according to the invention;
- Fig. 3B: shows the clamp shown in Fig. 3A being mounted on a flange;
- Fig. 3C: shows a close-up view of the contact member of the clamp shown in Fig. 3B;
- Fig. 4A: shows a schematic view of a flange processing device according to the invention in a first configuration;
- Fig. 4B: shows a schematic view of the flange processing device shown in Fig. 4A in a second configuration;
- Fig. 4C: shows a schematic view of the flange processing device shown in Fig. 4A in a third configuration;
- Fig. 5A: shows a flange processing device according to the invention;
- Fig. 5B: shows the flange processing device shown in Fig. 5A arranged in a tubular structure;
- Fig. 5C: shows a security bolt of a flange processing device according to the invention;
- Fig. 5D: shows a body portion of a flange processing device according to the invention;
- Fig. 6A: shows a processing unit of a flange processing device according to the invention;
- Fig. 6B: shows a clamp of a flange processing device according to the invention;
- Fig. 6C: shows a spacer of a flange processing device according to the invention;
- Fig. 6D: shows a spacer of a flange processing device according to the invention;
- Fig. 7A: shows a flange having a circular cross-section;
- Fig. 7B: shows a flange having an oval cross-section because the flange has been deformed due to the load induced by gravity;
- Fig. 7C: shows a distance sensor of a flange processing device according to the invention;
- Fig. 7D: shows a distance sensor of a flange processing device according to the invention;
- Fig. 8A: shows a graph illustrating two measurements of flatness of a distance sensor of a flange processing device according to the invention;
- Fig. 8B: shows a diagram illustrating the difference between the two curves illustrated in Fig. 8A and
- Fig. 8C: shows an example of a flange.

### Detailed description of the invention

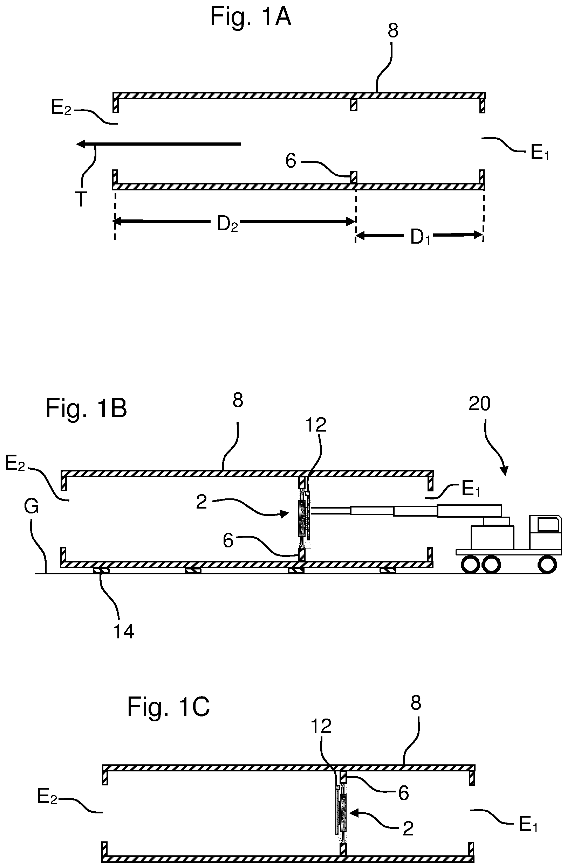

Referring now in detail to the drawings for the purpose of illustrating preferred embodiments of the present invention, a flange processing device 2 of the present invention is illustrated in Fig. 1B.

Fig. 1A illustrates a cross-sectional view of a tubular structure 8 having a longitudinal axis T and an inner flange 6. If the tubular structure 8 is a transmission piece or a segment of a wind turbine tower, the flange 6 typically needs to be processed e.g. because the flange is not sufficiently flat or has a geometry that differs from the optimum geometry.

The tubular structure 8 has a first end E₁ and a second end E₂. The distance D₁ between the first end E₁ and the flange 6 is indicated. Likewise, the distance D₂ between the second end E₂ and the flange 6 is indicated. It can be seen that the distance D₂ between the second end E₂ and the flange 6 is larger than the distance D₁ between the first end E₁ and the flange 6.

For a transmission piece, the shortest distance D₁ is typically about 8 meters, whereas the longest distance D₂ is about 15 meters. A lorry crane has typically an insert limit of about 8 meters, when a processing unit has to be mounted at the inner flange of a transmission piece. Accordingly, only the flange facing the first end E₁ can be processed.

Fig. 1B illustrates a flange processing device 2 according to the invention being mounted inside the tubular structure 8 shown in Fig. 1A to process a first side of the flange 6. A lorry crane 20 is lifting the flange processing device 2 into a position, in which the flange processing device 2 can be attached to the flange 6. The lorry crane 20 is lifting the flange processing device 2 into the tubular structure 8 via the first end E₁.

The flange processing device 2 comprises a processing unit 12 configured to process the flange 6. The processing unit 12 will typically be configured to carry out a milling and/or drilling process to remove excess material e.g. to flatten the flange.

The tubular structure 8 is arranged on a plurality of support elements 14 placed on the ground G.

Fig. 1C illustrates the flange processing device 2 shown in Fig. 1B, in a configuration, in which the flange processing device 2 has been rotated to process the opposite side of the flange (the side that faces the second end E₂). The flange processing device 2 is capable of being rotated to orientate the processing unit 12 as shown in Fig. 1C, in which the processing unit 12 can process the side of the flange 6 that faces the second end E₂.

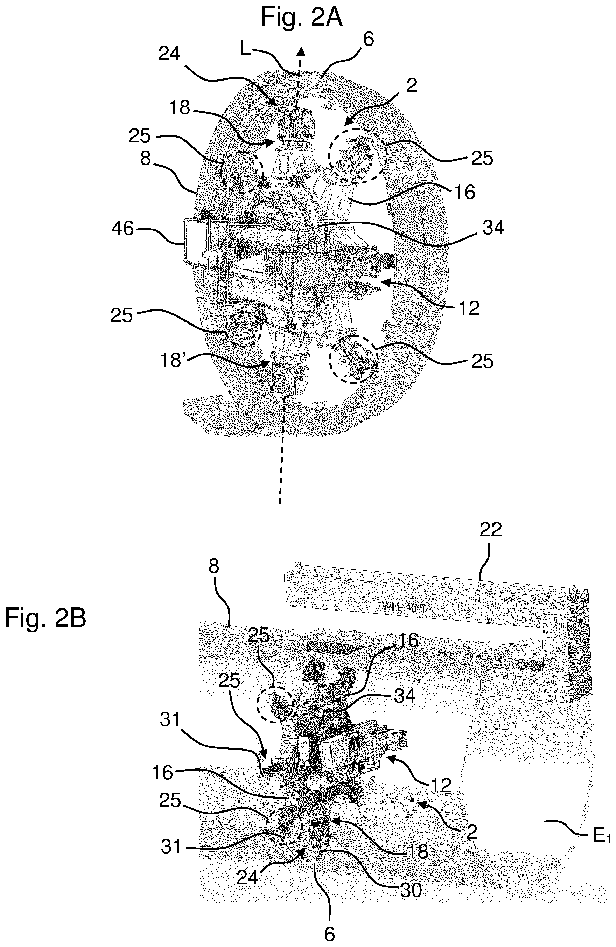

Fig. 2A illustrates a flange processing device 2 according to the invention mounted on a flange 6 of a tubular structure 8. The flange processing device 2 comprises a centrally arranged body portion 34. A processing unit 12 is attached to the body portion 34. A plurality of intermediate members 16 is attached to and extends from the body portion 34. At the distal end of each intermediate member 16, a clamp 24 or an attachment member 25 is attached. The uppermost and lowermost intermediate member 16 comprises a clamp 24, whereas each of the remaining intermediate members 16 comprises an attachment member 25.

The uppermost and lowermost intermediate member 16 comprises a rotation unit 18, 18' configured to rotate the body portion 34 about the axis L extending between the uppermost and lowermost intermediate member 16. The processing unit 12 comprises a counterweight 46.

Fig. 2B illustrates a flange processing device 2 according to the invention being mounted on a flange 6 of a tubular structure 8. A lifting structure 22 has been inserted into the tubular structure 8 via an opening in the first end E₁. The flange processing device 2 basically corresponds to the one shown in and explained with reference to Fig. 2A. The attachment member 25 comprises a contact element 31 configured to be brought into engagement with the flange 6 in order to attach the flange processing device 2 to the flange 6. The clamp 24 comprises a contact member 30 configured to be brought into engagement with the flange 6 in order to attach the flange processing device 2 to the flange 6. When the contact elements 31 and the contact members 30 have been brought into engagement with the flange 6, the flange processing device 2 is attached to the flange 6 and the processing unit 12.

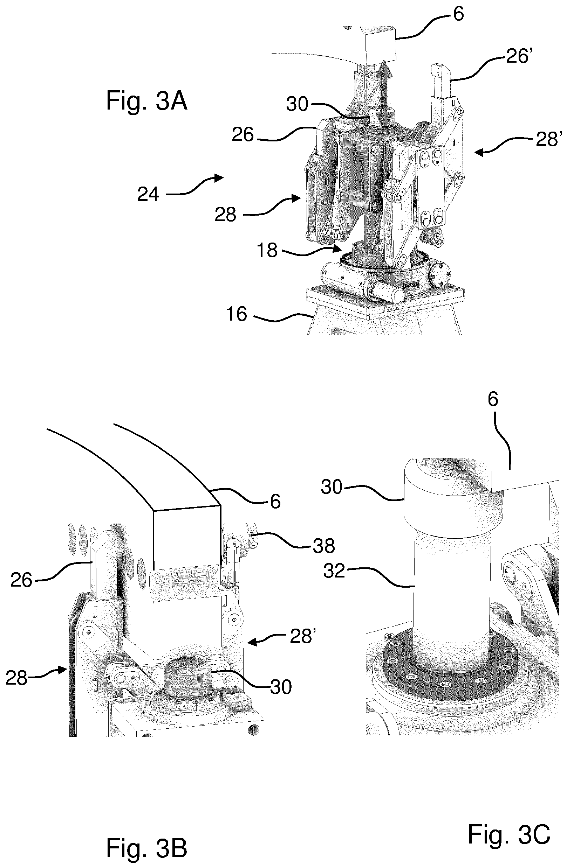

Fig. 3A illustrates a close-up view of a clamp 24 of a flange processing device according to the invention. The clamp 24 is designed to be used to attach a flange processing device according to the invention to a flange 6. The clamp 24 comprises a first clamp member 28 and a contact member 26. The contact member 26 is configured to be brought into a position, in which the contact member 26 bears against a first side of the flange 6.

The clamp 24 extends in extension of an intermediate member 16 and comprises a second clamp member 28' and a contact member 26'. The contact member 26' is configured to be brought into a position, in which the contact member 26' bears against the same or an opposite (second) side of the flange 6.

Each clamp member 28, 28' is configured to move its contact member 26, 26' along the sides of the flange 6 to bring the flange processing device in a fixed position relative to the flange 6.

The clamp 24 comprises a moveably arranged contact member 30 that is configured to be brought into engagement with the flange 6. The contact member 30 is configured to be brought into engagement with a tangential surface of the flange 6, whereas the contact members 26, 26' are configured to be brought into engagement with the axial surfaces of the flange 6.

A rotation unit 18 is arranged to rotate the clamp 24 relative to the intermediate member 16 and hereby rotate the flange processing device. The clamp 24 may correspond to the uppermost clamp shown in Fig. 2A and Fig. 2B.

Fig. 3B illustrates the clamp shown in Fig. 3A being mounted on a flange 6. It can be seen that the first clamp member 28 has been used to bring the contact member 26 into engagement with a first tangential surface of the flange 6. The clamp comprises a second clamp member 28' configured to bring a second contact member (not shown) into engagement with the other tangential surface of the flange 6.

The clamp comprises a contact member 30 arranged at a distance from the axial surface of the flange 6. The contact member 30, however, can be displaced towards the axial surface of the flange 6 and hereby be brought into engagement with the axial surface of the flange 6. A security bolt 38 is mounted in an axially extending hole of the flange 6.

Fig. 3C illustrates a close-up view of the contact member 30 of the clamp shown in Fig. 3B. The clamp comprises a moveably mounted rod 32. The contact member 30 is arranged at the distal end of the rod 32.

The contact member 30 has been brought into contact with the axial surface of the flange 6.

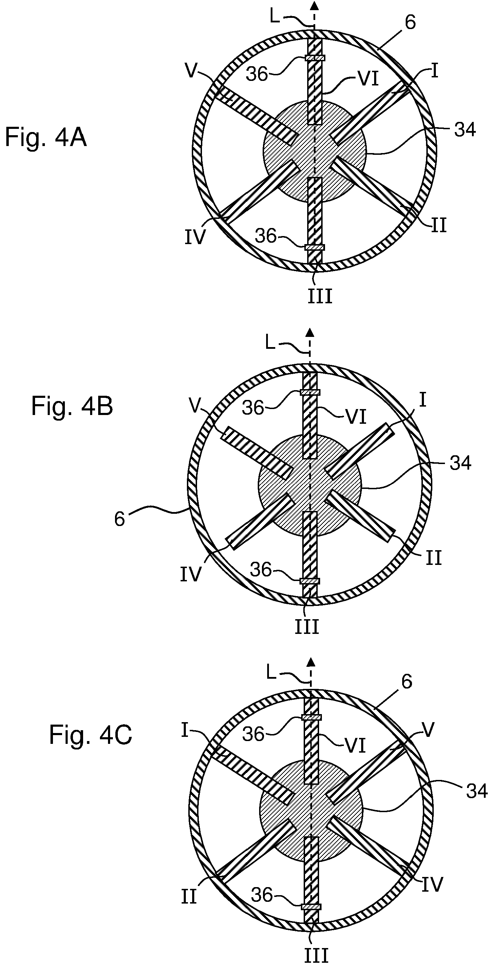

Fig. 4A illustrates a schematic view of a flange processing device according to the invention in a first configuration. The flange processing device comprises a centrally arranged body portion 34 and six arms I, II, III, IV, V, VI extending radially from the body portion 34.

The uppermost arm VI and the lowermost arm III comprise a bearing 36 constituting a rotating unit configured to rotate the body portion 34 of the flange processing device about an axis L extending along the uppermost arm VI and the lowermost arm III. The body portion 34 of the flange processing device can only be rotated about the axis L when the first arm I, the second arm II, the fourth arm IV and the fifth arm V are not attached to the frame 6.

Each of the arms I, II, III, IV, V, VI comprises a distal portion (not shown) configured to detachably attach the arm to the flange 6. The distal portion (not shown) will typically be moveably arranged so that the distal portion can be displaced along the length of the arm. Hereby, the distal portion can be moved at least between a first position, in which the distal portion is in engagement with the flange 6 and a second position, in which the distal portion is brought out of engagement with the flange 6.

Fig. 4B illustrates a schematic view of the flange processing device shown in Fig. 4A in a second configuration. In the second configuration the first arm I, the second arm II, the fourth arm IV and the fifth arm V are not attached to the frame 6. Accordingly, the body portion 34 of the flange processing device can be rotated about the axis L.

Fig. 4C illustrates a schematic view of the flange processing device shown in Fig. 4A in a third configuration, in which the body portion 34 of the flange processing device has been rotated 180 degrees about the axis L. Accordingly, the first arm I and the fifth arm V have switched positions. Likewise, the second arm II and the fourth arm IV have switched positions. Since the sixth arm VI and the third arm III are still attached to the flange 6, the positions of the sixth arm VI and the third arm III are remained.

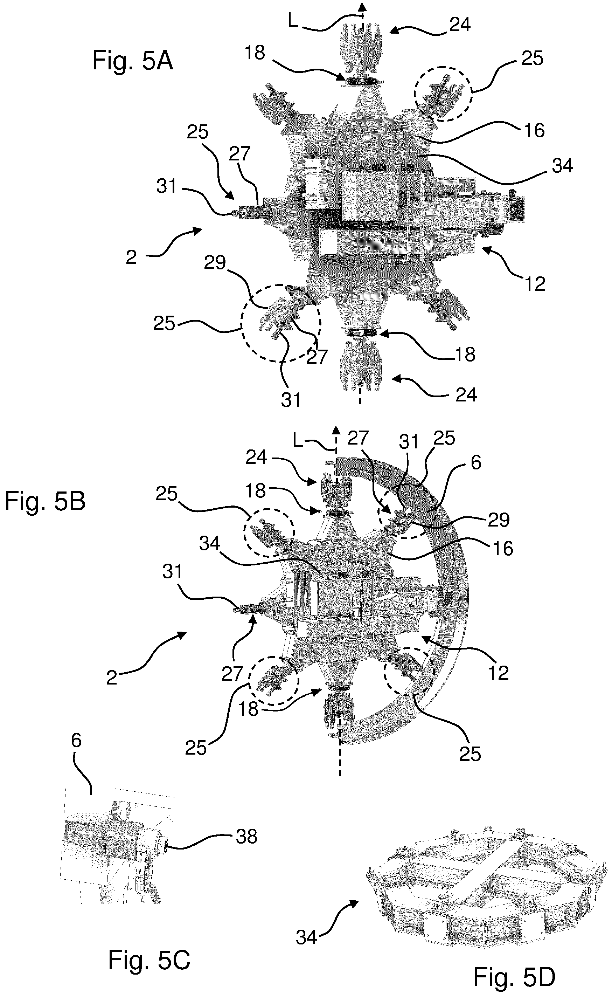

Fig. 5A illustrates a flange processing device 2 according to the invention. The flange processing device 2 comprises a centrally arranged body portion 34. A processing unit 12 is attached to the body portion 34. A plurality of intermediate members 16 are attached to and extends from the body portion 34. At the distal end of the uppermost and the lowermost intermediate member 16, a clamp 24 is attached. At the distal end of each of the remaining intermediate members 16 an attachment member 25 is attached.

The uppermost and lowermost intermediate member 16 comprise a rotation unit 18, 18' configured to rotate the body portion 34 about the axis L extending between the uppermost and lowermost intermediate member 16 (as shown in and explained with reference to Fig. 4A, Fig 4B and Fig. 4C). The processing unit 12 is configured to process a flange inside a tubular structure e.g. by milling the flange.

All attachment members 25 are equipped with a leg member 27 having a distally arranged contact element 31. The contact element 31 is arranged and configured to be brought into engagement with a flange to detachably attach the flange processing device 2 to the flange.

Some of the attachment members 25 are equipped with a moveably arranged flange support member 29. The flange support member 29 is arranged and configured to be brought into engagement with the side portion of the flange hereby providing a firm and reliable attachment to the flange.

The clamp 24 corresponds to the one shown in and explained with reference to Fig. 3A, Fig. 3B and Fig. 3C.

Fig. 5B illustrates the flange processing device 2 shown in Fig. 5A attached to an inner flange 6 of a tubular structure. The flange processing device 2 corresponds to the one shown in and explained with reference to Fig. 5A. It can be seen that the flange support members 29 of the attachment members 25 are configured to be brought into engagement with the axial sides of the flange 6.

It can be seen that the contact element 31 of each leg member 27 is configured to be brought into engagement with the tangential sides of the flange 6.

The clamp 24 of the uppermost and lowermost intermediate members 16 are configured to be brought into engagement with the axial sides of the flange 6.

The processing unit 12 is arranged in a position, in which the processing unit 12 can process a portion of the flange. The processing unit 12 is moveably arranged on the body portion 34 of the flange processing device 2. Accordingly, the processing unit 12 can be moved along the entire circumference of the flange 6. Therefore, the flange 6 can be processed along its entire circumference.

Fig. 5C illustrates a security bolt 38 of a flange processing device according to the invention. The security bolt 38 has been inserted into a hole of a flange 6.

Fig. 5D illustrates a body portion 34 of a flange processing device according to the invention. The body portion 34 comprises a centrally arranged cross member surrounded by an octagon frame. The body portion 34 is configured to receive intermediate members as the one shown in and explained with reference to Fig. 2A, Fig. 2B, Fig. 3A, Fig. 5A and Fig. 5B. The body portion 34 is configured to receive a processing unit as the one shown in and explained with reference to Fig. 2A, Fig. 2B, Fig. 5A and Fig. 5B.

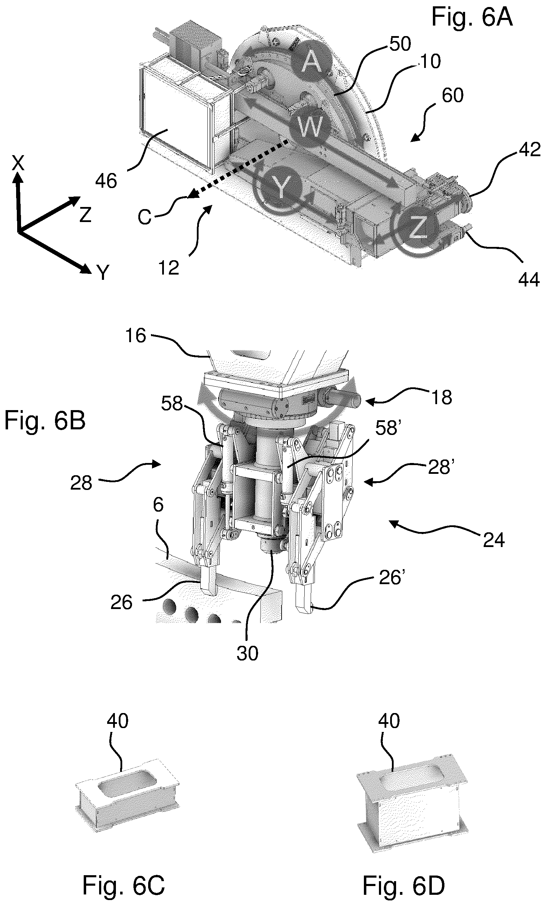

Fig. 6A illustrates a processing unit 12 of a flange processing device according to the invention. The processing unit 12 comprises a central portion 10 configured to be moveably attached to a body portion of a flange processing device according to the invention.

The processing unit 12 comprises a counterweight 46. The processing unit 12 comprises a main milling spindle 42 and a secondary milling spindle 44. Both the main milling spindle 42 and the secondary milling spindle 44 are configured to process (mill, plane down, hone, polish or drill) a flange.

The processing unit 12 comprises a moving member 60 configured to move the main milling spindle 42 and/or the secondary milling spindle 44 along the Y axis. The moving member 60 is configured to move the main milling spindle 42 and/or the secondary milling spindle 44 along the Z axis. The moving member 60 is configured to rotate (indicated with the A showing a yaw function) the main milling spindle 42 and/or the secondary milling spindle 44 about the center axis C extending parallel to the Z axis. The center axis C would typically correspond to the longitudinal axis of the tubular structure (see Fig. 1A). The moving member 60 may comprise one or more electrical, hydraulic or pneumatic motors.

The moving member 60 is configured to move the counterweight 46 along the Y axis (indicated with W).

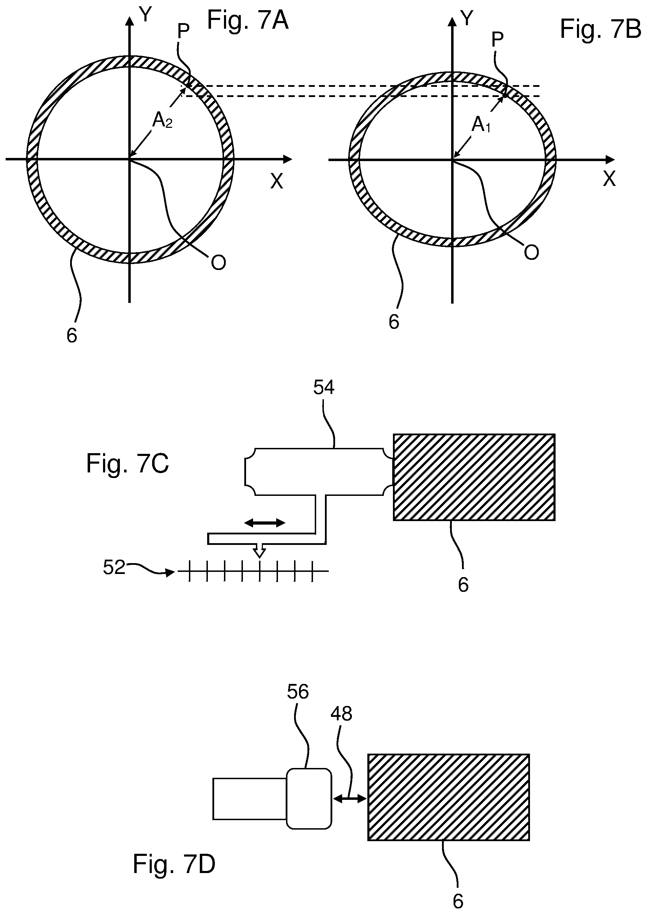

The processing unit 12 comprises a self-centering unit 50. The self-centering unit 50 is arranged and configured to ensure that a predefined distance to the periphery of the flange is kept even if the flange is deformed e.g. due load of mass. The self-centering unit 50 applies data provided by using a distance sensor as the one shown in and explained with reference to Fig. 7C and Fig. 7D.

Fig. 6B illustrates a clamp 24 of a flange processing device according to the invention. The clamp 24 may correspond to the uppermost clamp shown in Fig. 2A and Fig. 2B. The clamp 24 is designed to be used to attach a flange processing device according to the invention to a flange 6. The clamp 24 comprises a first clamp member 28 and a contact member 26. The contact member 26 is configured to be brought into a position, in which the contact member 26 bears against a first side of the flange 6. The first clamp member 28 comprises an actuator (e.g. a hydraulic cylinder) 58 arranged to generate motion of the contact member 26.

The clamp 24 extends in extension of an intermediate member 16 and comprises a second clamp member 28' and a contact member 26'. The contact member 26' is configured to be brought into a position, in which the contact member 26' bears against the same or an opposite (second) side of the flange 6. Likewise, the second clamp member 28' comprises an actuator (e.g. a hydraulic cylinder) 58' arranged to generate motion of the contact member 26'.

The clamp members 28, 28' are configured to move their contact member 26, 26' along the sides of the flange 6 to bring the flange processing device in a fixed position relative to the flange 6.

The clamp 24 comprises a moveably arranged contact member 30 configured to be moved and hereby be brought into engagement with the flange 6. The contact member 30 is configured to be brought into engagement with a tangential surface of the flange 6 as shown in Fig 3C. The motion of the contact member 30 may be generated by using an actuator (e.g. a hydraulic or pneumatic cylinder or an electric actuator).

A rotation unit 18 is arranged to rotate the clamp 24 relative to the intermediate member 16 and hereby rotate the flange processing device.

Fig. 6C illustrates a spacer 40 of a flange processing device according to the invention. Fig. 6D illustrates another (larger) spacer 40 of a flange processing device according to the invention. By using spacers 40 of different heights, it is possible to use the same flange processing device for tubular structures of different inner diameter.

Fig. 7A illustrates an inner flange 6 of a tubular structure, wherein the flange 6 has a circular inner diameter. The inner flange of a tubular structure is typically produced to be circular as illustrated in Fig. 7A. In practice, however, an inner flange 6 will deformed due to gravity e.g. when a tubular structure is arranged horizontally as shown in and explained with reference to Fig. 1B and Fig. 1C. Accordingly, the inner diameter of a flange 6 will typically be oval as shown in Fig. 7B.

Fig. 7B illustrates a flange 6 having an oval inner diameter because the flange 6 has been deformed due to the load induced by gravity. When comparing Fig. 7A and Fig. 7B, it can be seen that the distance A₂ between the center O of the flange 6 and the point P is larger in Fig. 7A than the distance A₁ between the center O of the flange 6 and the point P in Fig. 7B due to the deformation of the flange 6.

If the processing (e.g. flange flattening) is based on the assumption that the flange 6 has a circular inner diameter, the processing will not be carried out in an appropriate manner. Due to the deformation of the flange 6, processing of the flange 6 should be carried out taking into account the deformation of the flange 6. In order to do so, it is possible to measure the geometry of the inner diameter of the flange 6 before initiating the processing procedure as illustrated in and explained with reference to Fig. 7C and Fig. 7D.

Fig. 7C illustrates a distance sensor 54 of a flange processing device according to the invention. The distance sensor 54 is arranged and configured to measure the distance between the center of the flange (as shown in and explained with reference to Fig. 7A and Fig. 7B) and the inner periphery of the flange 6. The distance sensor 54 is moveably arranged and thus configured to detect said distance while being kept in contact with the inner periphery of the flange 6. The distance can be detected on the rule 52. It is important to underline that the rule 52 can be digital. The rule 52 is illustrated as a physical scale for illustration purposes only.

Fig. 7D illustrates a distance sensor 56 of a flange processing device according to the invention. The distance sensor 56 is arranged and configured to measure the distance between the center of the flange (as shown in and explained with reference to Fig. 7A and Fig. 7B) and the inner periphery of the flange 6. The distance sensor 56 is arranged and configured to detect the distance 48 between the distance sensor 56 and the inner periphery of the flange 6. In an embodiment, the distance sensor 56 is an optical distance sensor (e.g. a laser distance sensor). In an embodiment, the distance sensor 56 is an ultrasonic distance sensor.

The distance sensor 54, 56 will typically be moved along the entire inner periphery of the flange 6 to ensure that a sufficiently large number of measurements (e.g. 40) are provided. It may be an advantage that the measurements are carried out on measurements points that are evenly distributed along the periphery of the flange 6. In an embodiment, 30-50 measurement points are used.

In an embodiment, a measuring unit having a distance sensor 54, 56 as the one shown in Fig. 7C or Fig. 7D is used to measure the inner diameter of the flange 6 in a predefined number of points along the inner periphery of the flange 6.

The sensor 54, 56 can be used to detect how much the inner periphery of the flange 6 deviates from a perfect circle. The deviation data (from each measurement point) will typically be stored and used later (during processing of the flange 6.

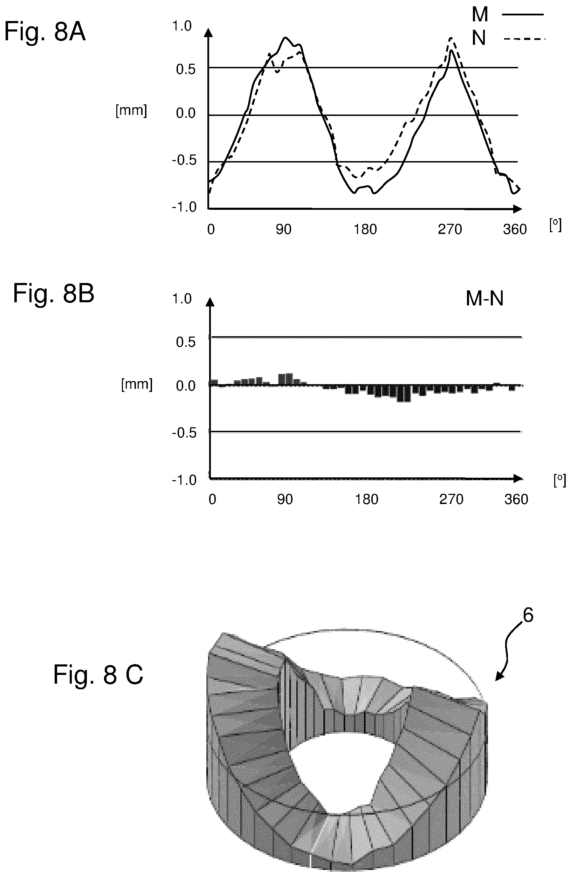

Fig. 8A illustrates a graph illustrating two measurements of flatness of a flange. The measurements are made by using a distance sensor of a flange processing device according to the invention (as the one shown in d and explained with reference to Fig. 7C and Fig. 7D). Initially, the distance sensor has been used to determine how much the inner periphery of the flange deviates from a perfect circle. These initial deviation data from each measurement point has been stored and is used to generate the data presented in Fig. 8A.

The graph illustrates a fist curve M and a second curve N. The first curve M represents a first series of measurements made on a first side of the flange, while the second curve N represents a second series of measurements made on the second side of the flange. The stored initial data have been used to adjust all measurements of the two curves M, N. Accordingly, the measurements of the two curves M, N have been adjusted by using the initial deviation data. A three-dimensional visualisation of the flange is shown in Fig. 8C.

The curves M, N show measurements in units of mm as function of the position along the periphery of the flange (measured in degrees).

Fig. 8B illustrates a diagram illustrating the difference between the two curves M, N illustrated in Fig. 8A.

### List of reference numerals

- 2: Flange processing device
- 4: Axial surface of a flange
- 6: Flange
- 8: Tubular structure
- 10: Central portion
- 12: Processing unit
- 14: Support element
- 16: Intermediate member
- 18, 18': Rotation unit
- 20: Lorry crane
- 22: Lifting structure
- 24: Clamp
- 25: Attachment member
- 26, 26': Contact member
- 27: Leg member
- 28, 28': Clamp member
- 29: Flange support member
- 30: Contact member
- 31: Contact element
- 32: Rod
- 34: Body portion
- 36: Bearing
- 38: Security bolt
- 40: Spacer
- 42: Main milling spindle
- 44: Secondary milling spindle
- 46: Counterweight
- 48: Distance
- 50: Self-centering unit
- 52: Rule
- 54: Distance sensor
- 56: Distance sensor
- 58, 58': Actuator (e.g. a hydraulic cylinder)
- 60: Moving member
- E₁: First end
- E₂: Second end
- D1, D₂: Distance
- A1, A₂: Distance
- G: Ground
- C: Center axis
- I, II: Arm
- III, IV: Arm
- V, VI: Arm
- X, Y: Axis
- Z, L: Axis
- P: Point
- O: Center
- T: Longitudinal axis of tubular structure

## Claims

1. Flange processing device (2) for processing a surface of an inner flange (6) of a tubular structure (8), said flange processing device (2) comprising:
- a body portion (34), wherein a plurality of intermediate members (16) is attached to and protrudes from the body portion (34), wherein a moveably arranged fixation element (24, 25) is provided at the distal end of each intermediate member (16), wherein each fixation element (24, 25) is configured to provide a detachable attachment of the fixation element (24, 25) to the flange (6);
- a processing unit (12) moveably attached to the body portion (34), wherein the processing unit (12) is arranged and configured to process the surface of the flange (6),
**characterised in that** the flange processing device (2) comprises a rotation unit (18, 18') configured to rotate the body portion (34) about an axis (L) extending along a length of one of the intermediate members (16).

2. Flange processing device (2) according to claim 1, wherein the flange processing device comprises:
a) a first rotation unit (18) configured to rotate the body portion (34) about the axis (L) extending along a length of a first intermediate member (16) and
b) a second rotation unit (18') configured to rotate the body portion (34) about the same axis (L), wherein the axis (L) extends along a length of a second intermediate member (16),
wherein the first intermediate member (16) and the second intermediate member (16) are arranged on opposed end of the body portion (34).

3. Flange processing device (2) according to claim 1 or 2, wherein the intermediate members (16) are detachably attached to the body portion (34).

4. Flange processing device (2) according to claim 3, wherein each intermediate member (16) is attached to a spacer (40).

5. Flange processing device (2) according to one of the preceding claims, wherein one or more of the fixation elements (24) is a clamp (24) comprising:
a) a first clamp member (28) and a contact member (26), wherein the contact member (26) is configured to be brought into a position, in which the contact member (26) bears against a first side of the flange (6);
b) a second clamp member (28') and a contact member (26'), wherein the contact member (26') is configured to be brought into a position, in which the contact member (26') bears against the same or an opposite side of the flange (6),
wherein the clamp (24) extends in extension of an intermediate member (16), wherein each clamp member (28, 28') is configured to move its contact member (26, 26') along the sides of the flange (6).

6. Flange processing device (2) according to claim 5, wherein the clamp (24) comprises a moveably arranged contact member (30) configured to be displaced and hereby be brought into engagement with the flange (6).

7. Flange processing device (2) according to one of the preceding claims 5-6, wherein the rotation unit (18) is arranged to rotate the clamp (24) relative to the intermediate member (16) to which the clamp (24) is attached and hereby rotate the flange processing device (2).

8. Flange processing device (2) according to one of the preceding claims, wherein one or more of the fixation elements (25) is an attachment member (25) comprising:
a) a leg member (27) having a distally arranged contact element (31) configured to be brought into engagement with the flange (6) and hereby detachably attach the flange processing device (2) to the flange (6).

9. Flange processing device (2) according to claim 8, wherein the attachment member (25) is equipped with a moveably arranged flange support member (29) arranged and configured to be brought into engagement with a side portion of the flange (6).

10. Flange processing device (2) according to one of the preceding claims, wherein the processing unit (12) comprises:
a) a main milling spindle (42) and/or a secondary milling spindle (44);
b) a moving member (60) configured to move the main milling spindle (42) and/or the secondary milling spindle (44) along a Y axis extending perpendicular to a longitudinal axis (T) of the tubular structure (8), wherein the moving member (60) is configured to move the main milling spindle (42) and/or the secondary milling spindle (44) along the longitudinal axis (T),
wherein the moving member (60) is configured to rotate the main milling spindle (42) and/or the secondary milling spindle (44) about the longitudinal axis (T).

11. Flange processing device (2) according to one of the preceding claims, wherein the flange processing device (2) comprises a distance sensor (54, 56) arranged and configured to measure the distance (A₁, A₂) between a center (O) of the flange (6) and the inner periphery of the flange (6).

12. Flange processing device (2) according to claim 11, wherein the flange processing device (2) is configured to prior to processing the flange (6):
a) moving the distance sensor (54, 56) along the entire inner periphery of the flange (6) and carry out a plurality of initial distance measurements along the periphery of the flange (6), wherein during each measurements the distance (A₁, A₂) between the center (O) of the flange (6) and the inner periphery of the flange (6) is measured;
b) for each initial measurement saving the measured distance (A₁, A₂) in a memory;
c) when processing the flange (6) afterwards using the saved initial measurements to adjust for the deviation between the inner periphery of the flange (6) and a circular geometry.

13. Flange processing device (2) according to one of the claims 10-12, wherein the processing unit (12) comprises a self-centering unit (50) arranged and configured to ensure that a predefined distance between a periphery of the flange (6) and the main milling spindle (42) and/or the secondary milling spindle (44) is maintained.

14. Method for processing a surface of an inner flange (6) of a tubular structure (8) by using a flange processing device (2) comprising:
- a body portion (34), wherein a plurality of intermediate members (16) is attached to and protrudes from the body portion (34), wherein a moveably arranged fixation element (24, 25) is provided at the distal end of each intermediate member (16), wherein each fixation element (24, 25) is configured to provide a detachable attachment of the fixation element (24, 25) to the flange (6);
- a processing unit (12) moveably attached to the body portion (34), wherein the processing unit (12) is arranged and configured to process the surface of the flange (6),
**characterised in that** the method comprises the step of:
a) processing a first side of the flange (6) by using the flange processing device (2) being attached to the flange (6) in a first configuration;
b) rotating the body portion (34) 180° about an axis (L) extending along a length of one of the intermediate members (16) and attaching the flange processing device (2) to the flange (6) in this second configuration and
c) processing a second opposite side of the flange (6) by using the flange processing device (2) being attached to the flange (6) in the second configuration.

15. Method according to claim 14, wherein the processing unit (12) comprises:
a) a main milling spindle (42) and/or a secondary milling spindle (44);
b) a moving member (60) configured to move the main milling spindle (42) and/or the secondary milling spindle (44) along a Y axis extending perpendicular to a longitudinal axis (T) of the tubular structure (8), wherein the moving member (60) is configured to move the main milling spindle (42) and/or the secondary milling spindle (44) along the longitudinal axis (T),
wherein the moving member (60) is configured to rotate the main milling spindle (42) and/or the secondary milling spindle (44) about the longitudinal axis (T).
